# EUROPÄISCHE PATENTSCHRIFT

(11) **EP 1 348 143 B1**
(45) Veröffentlichungstag und Bekanntmachung des Hinweises auf die Patenterteilung: **28.09.2005**
(21) Anmeldenummer: 01985918.0
(22) Anmeldetag: 20.12.2001
(51) Int. Cl.: G02B 6/42, H01L 31/0203

(54) **KOPPLUNGSANORDNUNG ZUM OPTISCHEN KOPPELN EINES LICHTWELLENLEITERS MIT EINEM ELEKTRO-OPTISCHEN ELEMENT**
COUPLING DEVICE FOR OPTICALLY COUPLING AN OPTICAL WAVEGUIDE TO AN ELECTRO-OPTICAL ELEMENT
DISPOSITIF DE COUPLAGE POUR LE COUPLAGE OPTIQUE D'UN GUIDE D'ONDES OPTIQUES AVEC UN ELEMENT ELECTRO-OPTIQUE

(30) Priorität: 29.12.2000 DE 10065624
(43) Veröffentlichungstag der Anmeldung: 01.10.2003
(73) Patentinhaber: DIEMOUNT GmbH, 99099 Erfurt (DE)
(72) Erfinder: KRAGL, Hans, 31199 Diekholzen (DE)
(74) Vertreter: Körner, Ekkehard
(86) Internationale Anmeldenummer: PCT/EP2001/015153
(87) Internationale Veröffentlichungsnummer: WO 2002/054129

(56) Entgegenhaltungen:
- EP-A- 0 571 907
- EP-A- 0 611 975
- EP-A- 1 002 696
- WO-A-00/28362
- WO-A-96/22177
- WO-A-98/26885
- DE-A- 19 542 658
- DE-A- 19 852 832
- DE-C- 19 602 079
- US-A- 4 647 331
- US-A- 5 028 110
- US-A- 5 434 939
- US-A- 5 660 461
- US-A- 5 675 678
- US-A- 5 737 467
- US-A- 5 795 519
- US-A- 5 993 075

## Beschreibung

### Gebiet der Erfindung

Mit der zunehmenden Umstellung von elektrischer auf optische Nachrichtentechnik werden optische Transceivermodule in allen Bereichen der Datenübertragung benötigt. Neben der hochratigen, optischen Übertragungstechnik auf Fernleitungen über Glasfasern kommt zunehmend auch die optische Übertragungstechnik mit vergleichsweise niedrigen Datenraten über relative "dicke" Polymerfasern oder hybride Glas/Polymerfasern (sog. HCS-Fasern) zur Anwendung. Typischerweise werden nicht hunderte von Kilometern sondern nur einige 10 bis 100 m mit Datenraten von maximal einigen 100 MB/s übertragen. Eingesetzt werden solche Systeme innerhalb mobiler Einrichtungen (Kfz, Bahn, Flugzeug) oder zur sog. Inhouse-Vernetzung, d.h. innerhalb eines Gebäudes zur datenmäßigen Verbindung aller im Haus vorhandenen Multimediageräte (TV, Internet, Videorecorder, Audiogeräte, PCs usw.). Aus Kostengründen arbeiten diese Netze oftmals nicht mit Laserdioden, sondern mit einfachen, oberflächenemittierenden Leuchtdioden (LEDs). Für die Ankopplung einer solchen LED an einen relativ dicken Lichtwellenleiter wird ein sehr kostengünstiger Aufbau gefordert, der dennoch eine erhebliche Präzision verlangt. Das elektro-optische Modul, das die Koppelstelle von LED-Sender zu Lichtwellenleiter bzw. von Photodioden-Empfänger zu Lichtwellenleiter enthält, nennt man einen optischen Transceiver.

### Technischer Hintergrund der Erfindung

Für die Kopplung einer oberflächenemittierenden LED und eines relativ dicken Polymerfaser-Lichtwellenleiters - typische Dimensionen sind 250x250 µm² für die LED und 1000 µm Durchmesser für die Polymerfaser - gibt es grundsätzlich zwei Konstruktionen, nämlich solche ohne Strahlformung und solche mit Strahlformung. Strahlformung bedeutet, daß einige oder alle der von der LED abgegebenen Lichtstrahlen durch Linsen oder gekrümmte Spiegel in ihrer Ausbreitungsrichtung so verändert werden, daß ein höherer Lichtanteil in den Lichtwellenleiter eingekoppelt werden kann, als wenn auf solche Maßnahmen verzichtet würde. Die Ausrichtung von Lichtwellenleiter (LWL) zu LED verlangt angesichts der vorgenannten Abmessungen in jedem Falle eine hohe Präzision.

Einen Ansatz hierfür zeigt die in jüngster Zeit bekannt gewordene MicroMID-Technologie, die beispielsweise in DE 198 51 265 A1 beschrieben ist. Hierbei wird ein mikrostrukturierter Kunststoffträger eingesetzt, der in der Form thermoplastisch sehr flexibel gestaltet werden kann. Die Herstellung eines Reflektors für die LED bei gleichzeitiger Herstellung eines elektronischen Schaltkreises auf dem Substrat ist möglich. Die Justierung des LWL erfolgt vermittels einer auf dem Substrat ausgebildeten dreidimensionalen Struktur. Nachteilig sind jedoch die hohen Rüstkosten der Technologie, so daß nur große Stückzahlen ihren Einsatz rechtfertigen. Da in MicroMID-Technologie die elektronische Schaltung des Trarisceivers letztlich im Spritzgußwerkzeug abgebildet sein muß, ist die Technologie schwerfällig in der Anpassung an kundenspezifische Varianten der Schaltung. Die Justierung erfolgt zwischen LED und LWL auf dem Weg LED zu mikrostrukturierter Leiterplatte zu Faserplatte zu LWL Veröffentlichungen zum MicroMID-Prozess finden sich in Kragl, H. et.al.: "MICROMID: A low cost fabrication technology for polymer fiber transceiver modules", POF Conference 2000, Boston und in Kragl, H. et.al.: "Microstructured three-dimensional printed circuit boards: a novel fabrication technology for optical transceiver modules", Proc. MicroTec 2000 Conference, Hannover.

Aus der DE 38 34 395 C2 ist eine den Ausgangspunkt der Erfindung nach dem Oberbegriff des Anspruchs 1 bildende Kopplungsvorrichtung einer optischen Faser mit einer LED bekannt. Die LED ist direkt auf einer flächigen Elektrode, nämlich einem sogenannten Leadframe, angeordnet. Das Kopplungselement, das das Ende einer optischen Faser aufnimmt, deren freie Stirnfläche der LED gegenübergestellt werden soll, hat eine Art Sockel, der zu den Leitern des Leadframe passende Ausschnitte aufweist, in denen diese Leiter aufgenommen sind. Auf dem einen Leiter ist, wie schon erwähnt, die LED befestigt, während der andere Leiter mit der LED durch einen Bonddraht verbunden ist. Um die LED auf dem Leadframe hoch präzise anzubringen, ist ein optischer Mustererkennungsvorgang notwendig, der indessen so langsam abläuft, daß ein Einsatz bei Massenfertigung ausscheidet. Überläßt man hingegen die Plazierung des Halbleiterbauelements einem Massen-Diebonder, müssen Toleranzen im Größenordnungsbereich von 50 µm bis 70 µm hingenommen werden. Bei der Anbringung des Kopplungselements am Leadframe kann es leicht zu einer Beschädigung desselben, leichter noch aber zu einer Beschädigung des Bonddrahtes kommen. Will man dieses vermeiden, müssen zusätzliche Toleranzen berücksichtigt werden, so daß bei Massenfertigung mit einer Gesamttoleranz von 200 µm gerechnet werden muß.

Aus der EP 0 611 975 A1 ist eine Kopplungsanordnung zum Ankoppeln eines Lichtwellenleiters an eine opto-elektronische Vorrichtung, beispielsweise eine Leuchtdiode oder eine Photodiode, bekannt, bestehend aus einem quaderförmigen Basisteil aus einem Silicium-Einkristall und einem darauf flächig aufliegenden, quaderförmigen Abdeckteil ebenfalls aus einem Silicium-Einkristall. Im Basisteil ist eine V-förmige Nut zur Aufnahme des entmantelten Endes eines Lichtwellenleiters ausgebildet, die in einer unter 45° geneigten verspiegelten Schrägfläche endet. An dem der,Schrägfläche entgegengesetzten Ende der Nut mündet diese in eine V-förmige Nut größeren Querschnitts, die der Aufnahme des ummantelten Abschnitts des Lichtwellenleiters dient und sich bis zu einem Rand des Basisteils erstreckt. Im Bereich über der Schrägfläche ist die opto-elektronische Vorrichtung auf dem Basisteil befestigt. Das Abdeckteil weist an seiner dem Basisteil zugewandten Seite eine V-förmige Nut auf, deren Querschnitt dem größerem Querschnitt der V-förmigen Nut im Basisteil entspricht. In dem Bereich, in welchem sich das Halbleiterbauelement befindet, hat das Abdeckteil eine Aussparung, die Platz für die Aufnahme der opto-elektronischen Vorrichtung bietet.

Die Ausrichtung von Basisteil und Abdeckteil aufeinander erfolgt mittels zweier Kugeln, die in zueinander passenden pyramidenförmigen Vertiefungen in Basisteil und Abdeckteil aufgenommen sind. Das Abdeckteil hat zwei Durchbrüche, durch die hindurch eine Vergussmasse in den Bereich der elektro-optischen Vorrichtung und des ummantelten Lichtwellenleiters eingefüllt werden kann. Über die Art, wie die opto-elektronische Vorrichtung auf die verspiegelte Schrägfläche ausgerichtet wird, um die gewünschte Genauigkeit, die mit +/- 1µm angegeben ist, zu erreichen, schweigt sich die Druckschrift aus.

Aus der DE 33 39 189 A1 ist eine Laser-Glasfaser-Kopplung und ein Verfahren zur Herstellung einer solchen Koppelverbindung bekannt, bei der zur Erzielung optisch günstiger Verhältnisse sowie einer gegen Umwelteinflüsse unempfindliche Koppelverbindung zwischen einem Halbleiterlaser und einer Lichtleitfaser die Koppelstelle mit einer aushärtenden Kunstharzmasse verkapselt wird.

Aus der US 6 004 046 ist eine optische Kopplungseinrichtung zwischen einem optischen Halbleiter und einem Lichtwellenleiter bekannt, die einen Parabolspiegel verwendet, der die vom optischen Halbleiter ausgehenden Lichtstrahlen nicht nur bündelt, sondern zugleich im wesentlichen um 90° umlenkt.

### Übersicht über die Erfindung

Der Erfindung liegt die Aufgabe zugrunde, eine Kopplungsanordnung der eingangs genannten Art anzugeben, mit der eine hochpräzise Ausrichtung von lichtabgebendem und/oder lichtaufnehmendem Halbleiterbauelement einerseits und Lichtwellenleiter andererseits in technisch einfacher Weise erzielbar ist.

Diese Aufgabe wird durch die in Anspruch 1 bzw. Anspruch 2 angegebenen Merkmale gelöst. Vorteilhafte Ausgestaltungen davon sind Gegenstand der jeweils abhängigen Ansprüche.

Die Erfindung offenbart eine Anordnung zur optischen Kopplung eines optischen Halbleiterbauelements, beispielsweise einer Sendediode, an einen Lichtwellenleiter, deren wesentliches Element ein Submount ist, auf dem das Halbleiterelement positioniert ist. Der Submount und das Kopplungselement können strahlformende Reflektoren enthalten. Der Submount wird direkt auf einen Träger aufgesetzt, der beispielsweise eine konventionelle Leiterplatte, ein TO-Gehäuse, ein Leadframe (Rahmenblech) oder auch ein MID-Träger (MID = Moulded Interconnect Device) sein kann, und mindestens ein Bonddraht wird von dem Halbleiterbauelement auf den Träger geführt, der, falls er selbst nicht leitfähig, mit einem Leiter versehen ist, an den der Bonddraht angeschlossen werden kann. Die Justierung des LWL in Bezug auf das Halbleiterbauelement erfolgt durch Justierung des LWL am Submount entweder direkt oder mittels eines gesonderten Kopplungselements, das seinerseits durch formschlüssige Verbindung mit dem Submount präzise auf das Halbleiterbauelement ausgerichtet wird.

Der Submount besteht aus einem Metall oder aus Kunststoff mit einer Oberflächenmetallisierung und kann dann unmittelbar die elektrische Verbindung zwischen dem Träger und einer Elektrode des Halbleiterbauelements herstellen. Er kann auch aus einem isolierenden Material, wie z.B. mikrostrukturierter Keramik, bestehen. In jedem Falle ist es günstig, wenn der Submount gut wärmeleitfähig ist, um die von dem Halbleiterbauelement ausgehende Wärme gut abzuleiten.. Es versteht sich, daß wenn der Submount nicht der elektrischen Verbindung zu einer der Elektroden des Halbleiterbauelements dienen kann, das Halbleiterbauelement mittels wenigstens zweier Bonddrähte elektrisch angeschlossen werden muß.

Das Kopplungselement besteht vorzugsweise aus einem thermoplastisch hergestellten Kunststoffkörper mit einer in einem oberen, ersten Segment zylindrischen Bohrung, die sich in einem zweiten, unteren Segment in der Form ähnlich einem Rotationsparaboloid verjüngen kann. Insbesondere die Innenwand dieses Paraboloids ist dann vorteilhafterweise reflektierend beschichtet, z.B. durch Beschichtung mit einer dünnen Silberschicht. Alternativ kann das Kopplungselement als massives Metallteil, beispielsweise aus Silber, Aluminium oder Kupfer, letzteres vorzugsweise mit reflektierender Beschichtung, ausgebildet sein, das durch Tiefziehen hergestellt ist. Bei großen Herstellungsserien ist das Tiefziehen von Teilen aus Weichmetallen nämlich preisgünstiger als das Spritzgießen solcher Teile.

Am Fußpunkt des Paraboloids ist eine Vertiefung ausgebildet, deren Randkontur im wesentlichen mit der äußeren Kontur des verwendeten Submount übereinstimmt, um den Submount formschlüssig aufzunehmen und dadurch das Kopplungselement an dem Submount auszurichten. Weiterhin hat es zur Aufnahme von einem oder mehreren Bonddrähten (letzteres beispielsweise bei isolierendem Submount, siehe oben) mindestens eine Aussparung .

Die Montage erfolgt in folgenden Arbeitsschritten:
- Auf einem Träger mit einer zum Drahtbonden geeigneten Oberfläche wird ein Submount an einer hierfür vorgesehenen SteHe befestigt, beispielsweise aufgelötet oder mit Leitkleber aufgeklebt. Auch eine Befestigung mittels eines am Submount ausgebildeten Vorsprungs, beispielsweise eines Zapfens, an der dem Halbleiterbauelement abgewandten Seite, der in einer Vertiefung oder einem Loch des Trägers sitzt und darin gesichert ist, kommt in Betracht. Auf diesen Submount wird das Halbleiterbauelement durch Diebonden angebracht, wobei zur Erzielung der erforderlichen Präzision die im Submount befindliche Justagestruktur verwendet wird.
- Sodann wird das Halbleiterbauelement durch Drahtbonden von dem Halbleiterbauelement ausgehend mit einem Leiter auf dem Träger elektrisch verbunden.

Das Kopplungselement wird so auf dem Submount aufgesetzt und ausgerichtet, daß das Halbleiterbauelement durch eine hierfür vorgesehene Öffnung des Kopplungselementes hindurchschauen kann. Das Kopplungselement hat eine Justiergestaltung derart, daß es präzise auf den Submount paßt und damit das Halbleiterbauelement exakt positioniert. Selbstverständlich darf es bei der Justierung nicht zu einer Verletzung des Bonddrahtes bzw. der Bonddrähte kommen. Um die Gefahr einer Bonddrahtvertetzung zu vermeiden, kann der Submount einen seitlichen Bonddrahtschutz aufweisen.
- Sitzt das Kopplungselement richtig auf dem Träger, wird es in dieser Position mit dem Träger und dem Submount z.B. durch Kleben unlösbar und flüssigkeitsdicht verbunden.
- Sodann wird in den Submount, ggf, durch das Faserführungsloch des Kopplungselements hindurch, ein transparenter Kleber eingefüllt, der auch in den Ausschnitt fließt, in dem sich der Bonddraht erstreckt und dort den Bonddraht mit umschließt.

Dann wird der LWL eingesteckt, so daß sein Ende mit dem Kleber in Berührung gebracht wird und mit dem noch weichen Kleber verklebt. Alternativ ist es auch möglich, statt des LWL zunächst einen Stöpsel aus einem nicht klebfähigen Material zu verwenden, der so lange am Platz bleibt, bis der Kleber ausgehärtet ist, und der dann gegen den LWL ausgetauscht wird. Diese Alternative ermöglicht es, denn LWL später ggf. auszutauschen.

Ist im Kopplungselement oder am Submount ein geeigneter Vorsprung, im Kopplungselement beispielsweise eine Ringschulter, vorgesehen, wo die Stirnfläche des LWL beim Einschieben anstößt, so bedeutet dieses für die Montage eine wesentliche Erleichterung, da nun nicht mehr auf die exakte, axiale Position des LWL geachtet werden muß. Dieses stellt auch eine wesentliche Verbesserung gegenüber der MicroMtD-Tecnnik dar, die keine passive, axiale Justage für den LWL vorsieht. Beim Einschieben des LWL bzw. des Stöpsels entweicht etwa überschüssiger Kleber am LWL bzw. Stöpsel vorbei. Alternativ kann eine Pfeife oder andere, aus der Gießtechnik geeignete Einrichtung vorgesehen sein, die überschüssigen Kleber, der beim Einstecken des LWL bzw. des Stöpsels von diesem verdrängt wird, aufnimmt.

Der Submount und ggf. das Kopplungselement können durch geeignete Formgebung und Beschichtung mit optischen Reflektoren versehen sein.

Die zum Betrieb des Halbleiterbauelements (LED und/oder ein in gleicher Weise zu montierender Photodetektor) notwendige elektronische Schaltungsanordnung kann in unmittelbarer Nähe des Halbleiterbauelements auf dem Träger, der z.B. eine zweiseitig ausgelegte Leiterplatte sein kann, z.B. auf der Leiterplattenrückseite, anbracht sein. Damit befindet sich beispielsweise ein Vorverstärker für eine Photodiode (PD) in nur ca. 1 mm Entfernung von der PD. EMV-Probleme treten daher nicht auf. Da eine Leiterplatte in einem industrieüblichen Standardprozeß hergestellt wird, kann die auf ihr ausgeführte Verdrahtung problemlos nahezu beliebig komplex gestaltet werden. Auch sehr hochwertige Leiterplatten, wie Keramik- oder Teflonleiterplatten, die insbesondere für sehr hochfrequente Anwendungen notwendig sind, können eingesetzt werden.

Um ein komplettes Transceiversystem zu erhalten, kann man ein Kopplungselement mit flexibler Leiterplatte entweder in ein elektrisches Steckersystem einpassen und die LWL-Enden über ein Spleiß- oder Stecksystem anschließen oder aber das Kopplungselement mit starrer Leiterplatte wird direkt in eine Steckerbuchse eingesetzt, wobei die Steckkontakte z. B. durch Kontakte auf der Leiterplatte realisiert sind.

Im Gegensatz zu der bekannten MicroMID-Prozeßfolge wird bei der Erfindung der LWL nicht an dem Träger (z.B. Leiterplatte), sondern an dem das Halbleiterbauelement tragenden Submount justiert, und zwar vermittels des erwähnten Kopplungselements. Ist der Submount ein metallischer oder metallisierter Körper, kann er nicht die von einem Träger, z.B. einer Leiterplatte geforderte Stromführung für beide elektrischen Anschlußleiter, sondern nur für einen von ihnen aufweisen. Durch die Justierung über den Submount entstehen jedoch andererseits Vorteile gegenüber der MicroMID-Technologie:

Eine für jede Produktanwendung neu zu entwerfende Leiterplatte muß nicht in dem aufwendigen MicroMID-Verfahren mit hohen Rüstkosten realisiert werden. Die Anpassung der äußeren elektronischen Beschaltung auf einer Standardleiterplatte benötigt wesentlich kürzere Entwicklungszeiten und ist kostengünstiger.

Sowohl in MicroMID-Technik als auch in der klassischen Leadframe-Technik wird dafür gesorgt, daß die gesamte Metalloberfläche des Substrates bzw. des Leadframe drahtbondbar ist. Eine hierfür geeignete Oberflächenbeschichtung ist teuer (Palladium-Unterlage) und hat insbesondere den Nachteil, daß das optische Reflexionsverhalten der Schicht nicht optimal ist. Eine nicht bondfähige Silberschicht hätte für viele Anwendungen einen besseren Reflexionsfaktor, kann aber aus o.g. Grund nicht eingesetzt werden. Da es hingegen bei der Erfindung im allgemeinen nicht notwendig ist, auf dem Submount drahtzubonden, kann dieser mit einer ideal reflektierenden Beschichtung versehen werden, die nicht auf Bondfähigkeit zu achten braucht.

Ist das Substrat des Halbleiterbauelements nicht-leitend, so daß eine unmittelbare elektrische Kontaktierung desselben an dem Submount nicht möglich ist, muß die eine elektrische Verbindung zwischen Halbleiterbauelement und dem Träger durch Drahtbonden entweder auf den Submount oder unmittelbar auf den Träger hergestellt werden, während die andere elektrische Verbindung zwischen Halbleiterbauelement und Träger durch Drahtbonden unmittelbar auf den Träger erfolgt.

In weiterer Ausgestaltung der Erfindung sind eine Reihe von Varianten möglich und sinnvoll, welche sich abhängig von der geforderter Präzision und den Abstrahlungseigenschaften der Sendediode vorteilhaft auswirken.

Wenn zuvor und nachfolgend von einer LED oder Sendediode als Halbleiterelement gesprochen wird, soll dieses nicht als einschränkend verstanden werden, sondern nur als Beispiel, weil die Erfindung in gleicher Weise auch im Zusammenhang mit lichtempfangenden Halbleitern, wie Photodioden, Phototransistoren oder Photowiderständen anwendbar ist.

Die Erfindung soll nachfolgend unter Bezugnahme auf die Zeichnungen anhand von Ausführungsbeispielen näher erläutert werden.

### Kurzbeschreibuna der Zeichnungen

Fig. 1a und 1 b zeigen im Längsschnitt und in Draufsicht eine erste Ausführungsform der Erfindung mit einem Parabolspiegel im Kopplungselement;
Fig. 2a und 2b zeigen im Längsschnitt und in Draufsicht als Teil einer zweiten Ausführungsform der Erfindung einen Submount mit Parabolspiegel und gefrästem Schlitz für die Aufnahme eines Bonddrahtes;
Fig. 3a und 3b zeigen im Längsschnitt und in Draufsicht als Alternative zur Ausführungsform nach den Fig. 2a und 2b einen Submount mit Parabolspiegel und Bohrung für die Aufnahme eines Bonddrahtes;
Fig. 4 zeigt im Längsschnitt die zweite Ausführungsform entsprechend Fig. 2a und 2b mit einem Submount mit einem daran justierten Kopplungselement;
Fig. 5 zeigt im Längsschnitt als dritte Ausführungsform einen Submount ohne Reflektor und ein daran justiertes Kopplungselement mit Reflektor;
Fig. 6 zeigt die Abstrahldiagramme verschiedener Arten von lichtemittierenden Halbleitern;
Fig. 7 zeigt eine Glasfaserjustierung mittels einer hochpräzisen Ferrule als vierte Ausführungsform der Erfindung;
Fig. 8 zeigt eine fünfte Ausführungsform, bei der die eine Glasfaser aufnehmende Ferrule selbst das Kopplungselement bildet;
Fig. 9a und 9b zeigen im Längsschnitt und in Draufsicht eine sechste Ausführunsgform mit einem Submount, der eine Sende- und eine Empfangsdiode trägt, mit gemeinsamem Lichtwellenleiter;
Fig. 10 zeigt im Längsschnitt schematisch die Herstellung einer hohen Präzisionsanforderungen genügenden Passung von Kopplungselement und Faserhalterung;
Fig. 11 zeigt eine Konstruktion ähnlich Fig. 9a mit einem Kopplungselement aus transparentem Kunststoff;
Fig. 12 zeigt eine siebente Ausführungsform mit einem Submount, der mittels eines Zapfens an einem Träger festgelegt ist, mit einem als Parabolspiegel ausgebildeten Kopplungselement;
Fig. 13 zeigt einen Submount, der mittels eines Zapfens an einem Träger festgelegt ist und integral mit einem einen Lichtwellenleiter ausrichtenden Parabolspiegel ausgebildet ist;
Fig. 14 eine Draufsicht auf einen Leadframe (Rahmenblech), der zur Halterung der Submounts aus den beiden vorgenannten Ausführungsformen geeignet ist;
Fig. 15 eine schematische Darstellung eines Anwendungsbeispiels der Erfindung mit einem schichtförmigen, ebenen Lichtwellerileiter, und
Fig. 16 eine schematische Darstellung eines Anwendungsbeispiels der Erfindung mit einem schichtförmigen, tubusförmigen Lichtwellenleiter.

### Beschreibung der Ausführungsbeispiele

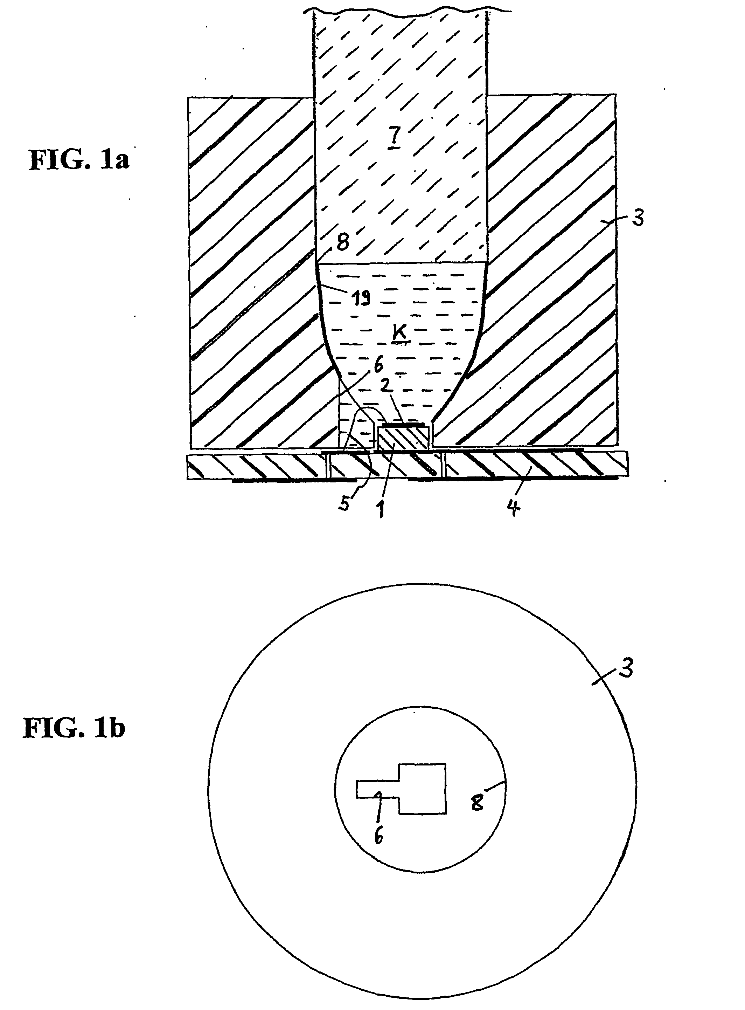

Die Figuren 1 a und 1 b zeigen eine Anordnung aus Submount 1 mit darauf angebrachter Leuchtdiode (nachfolgend LED) 2 und einem an dem Submount 1 justierten Kopplungselement 3 vorzugsweise aus Kunststoff. Der Submount besteht im vorliegenden Beispiel aus Metall und ist auf einer Leiterplatte 4 befestigt, vorzugsweise aufgelötet, und verbindet die eine Elektrode der LED elektrisch mit der auf der Leiterplatte 4 enthaltenen elektrischen Schaltung. Die andere Elektrode der LED ist mittels eines Bonddrahtes 5 elektrisch mit der auf der Leiterplatte 4 befindlichen Schaltung verbunden. Der Bonddraht 5 ist von einem Schlitz 6 in dem den Submount 1 umgebenden Abschnitt des Kopplungselements 3 aufgenommen und dadurch gegen Verletzung geschützt.

In dem Kopplungselement 3 ist eine Bohrung ausgebildet, die einen Lichtwellenleiter (nachfolgend LWL) 7 aufnimmt, der in diesem Beispiel eine optische Faser ist. Die Bohrung hat eine Ringschulter 8 im Abstand über ihrem unteren Ende, an der sich die Stirnfläche des LWL 7 abstützt. Unterhalb dieser Schulter 8 ist die Bohrung parabolisch ausgebildet und weist eine Verspiegelung 19 auf, um von der LED 2 ausgehende Lichtstrahlen, die die Bohrungswand treffen, in den LWL 7 zu reflektieren.

Wie ersichtlich, hat die Bohrung im Kopplungselement 3 an ihrem unteren Ende einen Querschnitt, der an den des Submount 1 angepaßt ist, so daß das Kopplungselement 3 an dem Submount 1 zentriert wird.

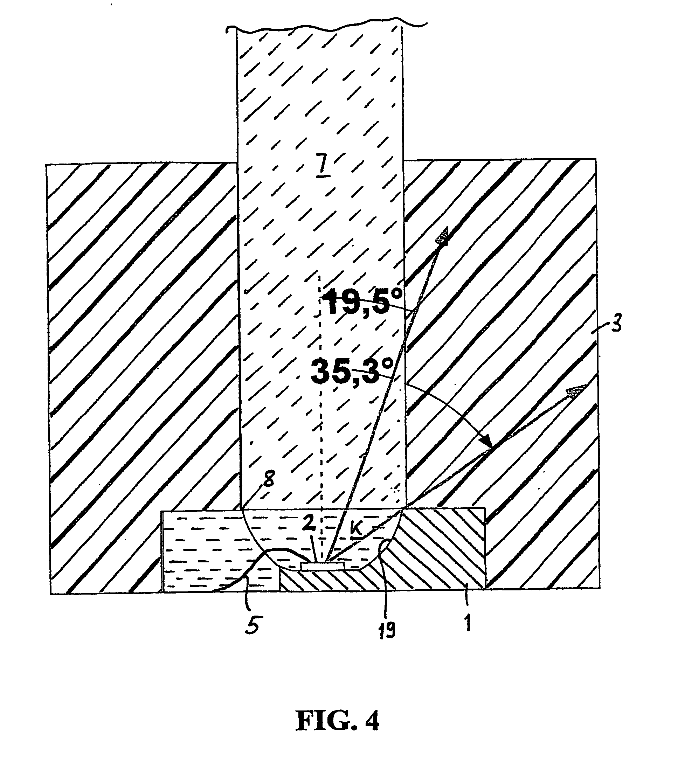

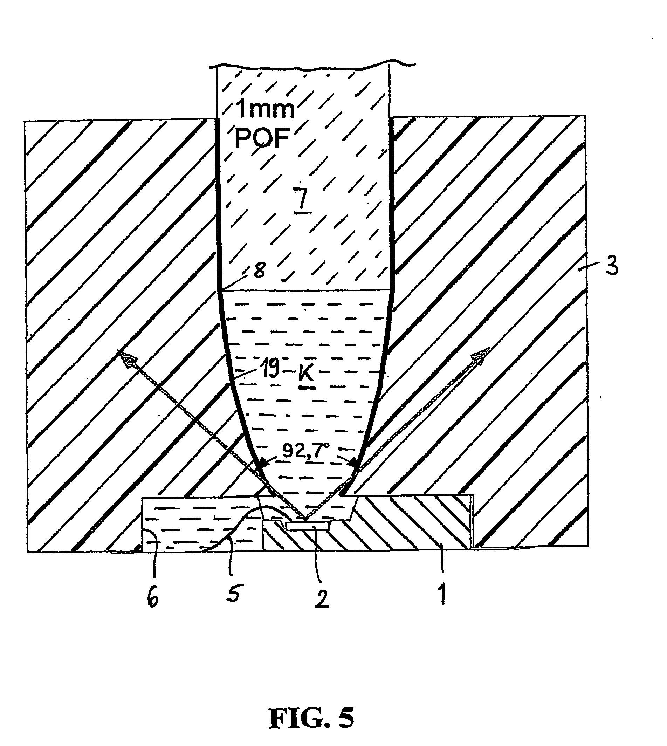

Der Zwischenraum zwischen der Stirnfläche des LWL 7 und der LED 2 sowie der Schlitz 6 sind mit einem transparenten Kleber K ausgefüllt, der bis an das Ende des LWL reicht und die optische Kopplung zwischen LED 2 und LWL 7 verbessert. Es versteht sich, daß beim Einfüllen des Klebers K der Schlitz 6 bzw. die Bohrung 6a im Submount 1 unten verschlossen sein muß, was beispielsweise durch den Träger 4 (siehe Fig. 1) gewährleistet ist, der in den Fig. 4 und 5 nicht dargestellt ist.

Alternativ zu Fig. 1 kann bei der Herstellung der Anordnung nach dem Einfüllen des transparenten Klebers K anstelle des LWL 7 zunächst ein Stöpsel aus nicht klebbarem Material, z.B. POM, PTFE oder ein verchromter Metallstift, in die Bohrung des Koppelelements 3 eingesetzt werden, der nach Aushärten des Klebers K aus der Bohrung wieder herausgezogen werden kann. In das so entstandene Loch kann nun der LWL 7 steckbar eingesetzt und ggf. wieder herausgenommen werden.

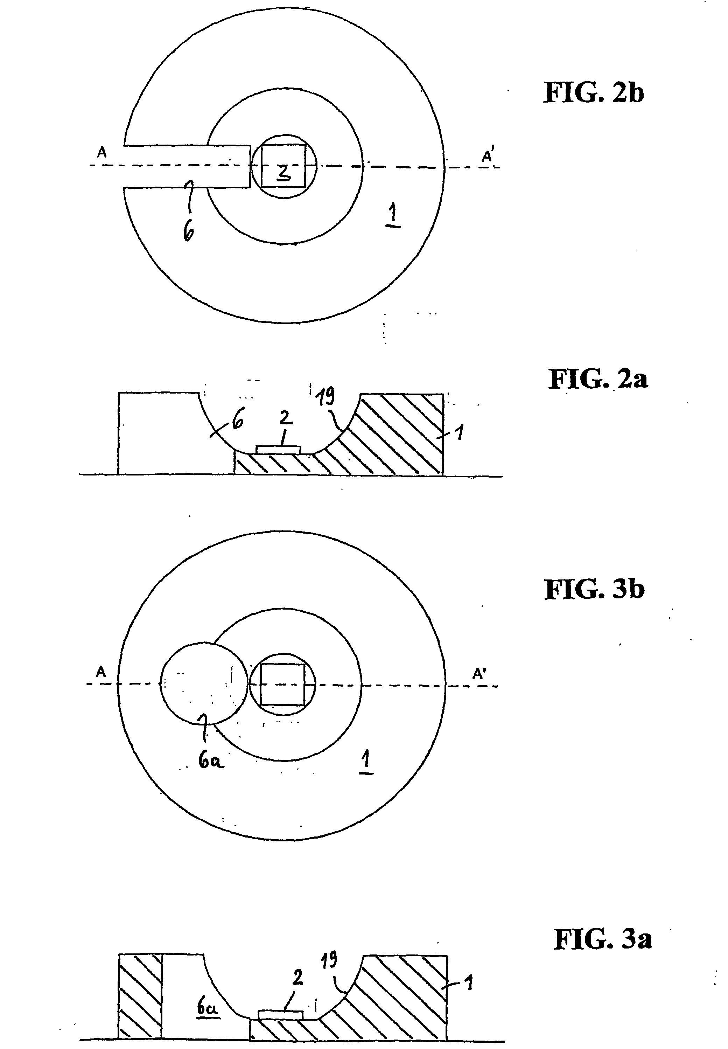

Die Fig. 2 bis 4 zeigen beispielhaft einen Submount mit Reflektor (Verspiegelung 19) als Drehteil mit Schlitz 6 (Fig. 2) bzw. Bohrung 6a (Fig. 3) für die Aufnahme eines Bonddrahtes. Auf eine detaillierte Erläuterung kann verzichtet werden, da die Zeichnungen für sich selbst sprechen.

In Fig. 4 ist gezeigt, wie das Kopplungselement 3 auf einen Submount 1 nach den Fig. 2 und 3 gefügt wird und der LWL 7 justiert wird. Man erkennt den Faserstop als schmalen ringförmigen Absatz 8 am Submount 1, da der obere Rand des darin ausgebildeten Reflektors 19 einen geringfügig kleineren Durchmesser hat, als der von dem Kopplungselement 3 gefaßte LWL 7, dessen Stirnfläche somit auf diesem Absatz 8 zur axialen Faserjustierung aufsitzt.

Für gewisse Anwendungen, beispielsweise in der Automobilindustrie, könnten gedrehte Submounts nicht ausreichend kostengünstig sein, so daß man dazu übergehen wird, das in den Fig. 2 bis 4 gezeigte Teil durch Stanzen und Tiefziehen herzustellen. Hierbei muß in einem Arbeitsgang der Submount aus einem ebenen Blech so verformt werden, daß er die benötigte Oberfläche erhält, und gleichzeitig die Öffnung für den Bonddraht ausgestanzt werden.

Alternativ kann der Reflektor 19 im Kopplungselement 3 ausgebildet sein (Fig. 1 und 5), was insbesondere dann vorteilhaft ist, wenn der Reflektor axial so lang werden muß, daß er im Submount nicht mehr technisch sinnvoll ausgeführt werden kann. Lange Reflektoren, wie in Fig. 5 dargestellt, sind vorteilhaft beim Einsatz achsnah abstrahlender Sendedioden, wie beispielsweise RCLEDs.

Durch Erzeugung einer Vertiefung (rund oder bei einem Stanzteil auch eckig) auf dem Submount an der Stelle, wo die LED positioniert werden soll, ist es möglich, für den Halbleiterchip eine passive Justiervorrichtung zu schaffen.

Ergänzend sei angemerkt, daß Stanz- und Tiefziehtechniken die für die Massenproduktion (Größenordnung 1 Mio. und mehr) geeignetsten Herstellungsverfahren für Submounts sind, doch muß die erforderliche Präzision gewährleistet sein. Wegen des benötigten Durchbruchs im Submount für den Bonddraht sind zwei Bearbeitungsschritte erforderlich, die ggf. auch gleichzeitig ausgeführt werden können, nämlich Umformung des Ausgangsbleches oder Ausgangsdrahtes (beim Tiefziehen arbeitet man vorteilhaft mit Drahtmaterial als Halbzeug, weil sich so keine Materialverluste ergeben) zur Erzeugung des Reflektors bzw. der Chipjustage und der Justagestruktur für das Kopplungselement, und Ausstanzen des Loches bzw. des Schlitzes für die Bonddrahtdurchführung. Alternativ kann das Loch bzw. der Schlitz durch Laserschneiden hergestellt werden. Als Material für gestanzte Submounts eignet sich entweder Bronze mit hohem Kupferanteil (leicht verformbar, gute Wärmeleitung) oder aber analog zu Autoscheinwerfern eine sehr reine Aluminiumlegierung (99% Al), die sich ebenfalls sehr leicht umformen läßt, aber auch Silber. Ein Submount aus Bronze muß vor oder nach dem Stanzvorgang galvanisch beschichtet werden, um eine hochglänzende Oberfläche zu erhalten, ein Submount aus Aluminium wird anschließend elektropoliert, was allerdings nur bei sehr reinen Aluminiumsorten in hoher Qualität machbar ist.

Die in den Figuren 1 bis 5 gezeigten Submounts können auch aus einem Kunststoff durch thermoplastische Abformung hergestellt werden, wenn dieser Kunststoffkörper anschließend durch einen metallischen Beschichtungsvorgang so präpariert wird, daß die Verlustwärme der Sendediode abgeführt werden kann, und, wenn der Submount einen Reflektor enthalten soll, die Metalloberfläche ausreichend gut reflektiert. Eine Beschichtung mit ca. 30 µm Kupfer und anschließend dünner Silberauflage erfüllt in der Regel diese Anforderung. Der Vorteil dieses Aufbaus liegt in der einfachen und dennoch hochpräzisen Gestaltungsmöglichkeit des Kunststoffsubmount.

Gleichfalls möglich ist es, den Submount aus mikrostrukturierter Keramik herszustellen, denn dieses Material ist grundsätzlich spritzgießbar.

Es ist auch möglich, sowohl Submount als auch Kopplungselement mit Reflektoren zu versehen.

Ein besonderer Vorteil der Erfindung ist, daß der Bonddraht von der Sendediode zur Leiterplatte äußerst kurz gehalten werden kann. Für Frequenzen bis zu einigen 100 MHz ist ein ca. 1 mm langer Bonddraht noch unkritisch.

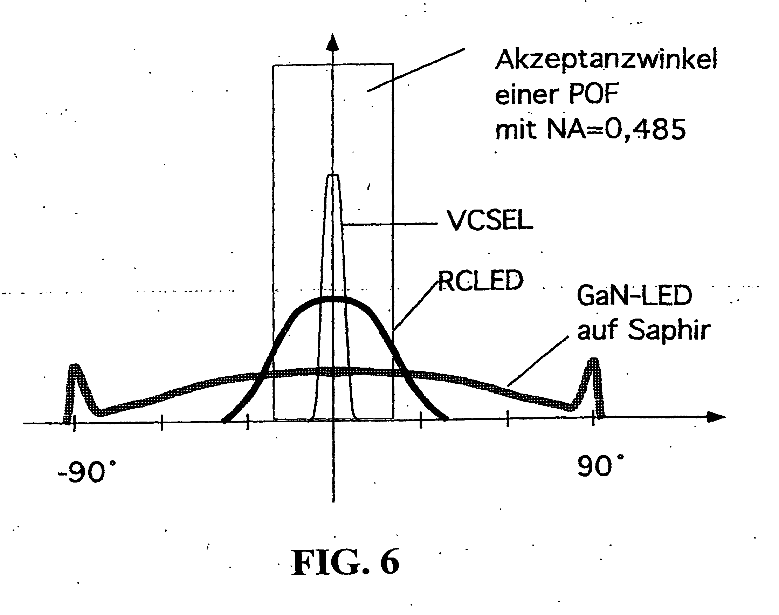

Es gibt eine Vielzahl unterschiedlicher Sendedioden, wobei jede eine, auch abhängig vom Betriebsstrom, charakteristische Strahlung in den Raumwinkel abgibt. Fig. 6 zeigt drei typische Raumwinkelspektren, wie sie für VCSEL, RCLED und GaN-LEDs auf Saphirsubstraten auftreten. Da die Strahlung einer VCSEL (Vertical Cavity Surface Emitting Laser diode) normalerweise voll im Akzeptanzwinkelbereich eines LWL liegt, sind strahlformende Maßnahmen in diesem Fall überflüssig. Das erfindungsgemäße Kopplungselement wird in diesem Fall lediglich zur lateralen Justierung zwischen Diode und LWL eingesetzt. Die Strahlung einer RCLED (resonant cavity light emitting diode) nimmt dagegen schon einen deutlich größeren Raumwinkelbereich ein, so daß strahlformende Maßnahmen auch bei Ankopplung an LWL mit hoher Apertur vorteilhaft sind. Die RCLED-Strahlung ist aber noch im wesentlichen auf achsennahe Bereiche konzentriert, so daß ein langer Parabolreflektor mit großem Abstand von der LED eingesetzt werden sollte, der so berechnet ist, daß das auf die Reflektorfläche auftreffende Licht in den LWL reflektiert wird. Für eine LED mit sehr breitem Winkelspektrum und einer ggf. sogar direkt zur Seite strahlenden Charakteristik ist dagegen ein kurzer Reflektor die wirksamste strahlformende Maßnahme. Hier kann die in erheblichem Umfang in lateraler Richtung aus dem Diodenchip austretende Strahlung in den LWL eingekoppelt werden.

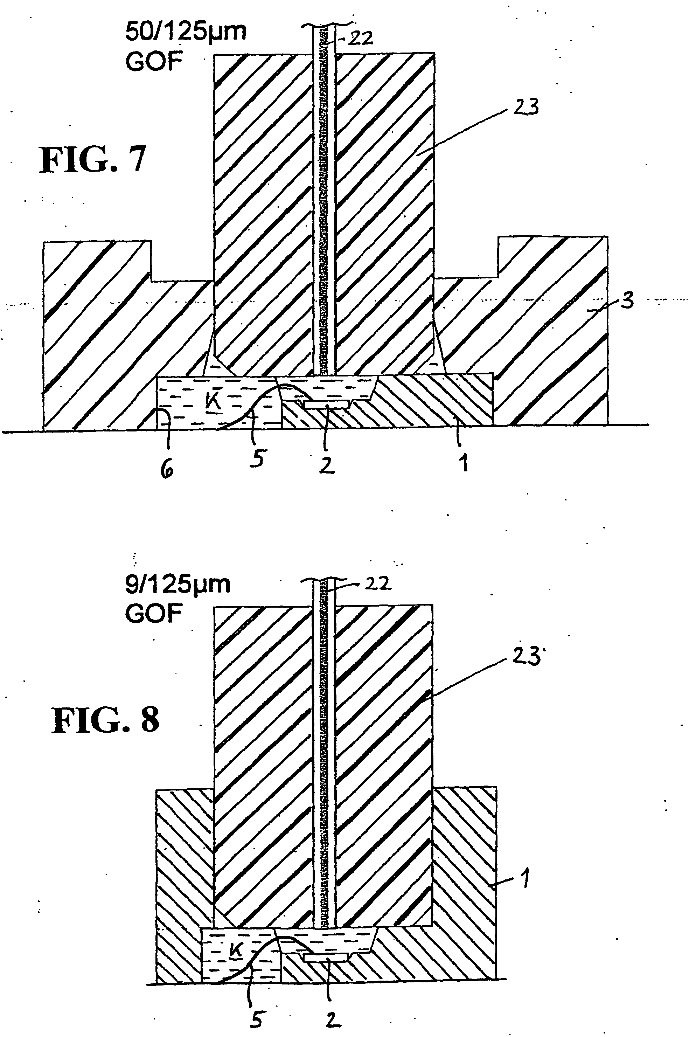

Sollen Transceiver für Glasfasern als LWL mit Standarddurchmessem von 125 µm hergestellt werden, wird die Herstellung eines Kopplungselementes mit einem einige mm langen, hochpräzisen Loch von nur 125 µm Durchmesser technisch sehr schwierig. Hier bietet es sich gemäß Fig. 7 an, die Glasfaser 22 zunächst durch eine hochpräzise Ferrule 23 (Toleranzen unter 1 µm) zu fassen und dann die Ferrule 23 in der erfindungsgemäßen Weise mittels des Kopplungselements 3 an dem Submount 1 zu justieren. Fig. 7 zeigt diese Anordnung.

Noch größere Anforderungen an die Justiergenauigkeit können erfüllt werden, wenn die Ferrule 23 selbst zugleich auch das erfindungsgemäße Kopplungselement bildet. Fig. 8 zeigt einen Submount 1, der an seiner Oberseite so ausgebildet ist, daß die Ferrule 23 mit der darin gefaßten Glasfaser direkt einsteckbar ist und dem Halbleiterchip zentriert gegenübersteht.

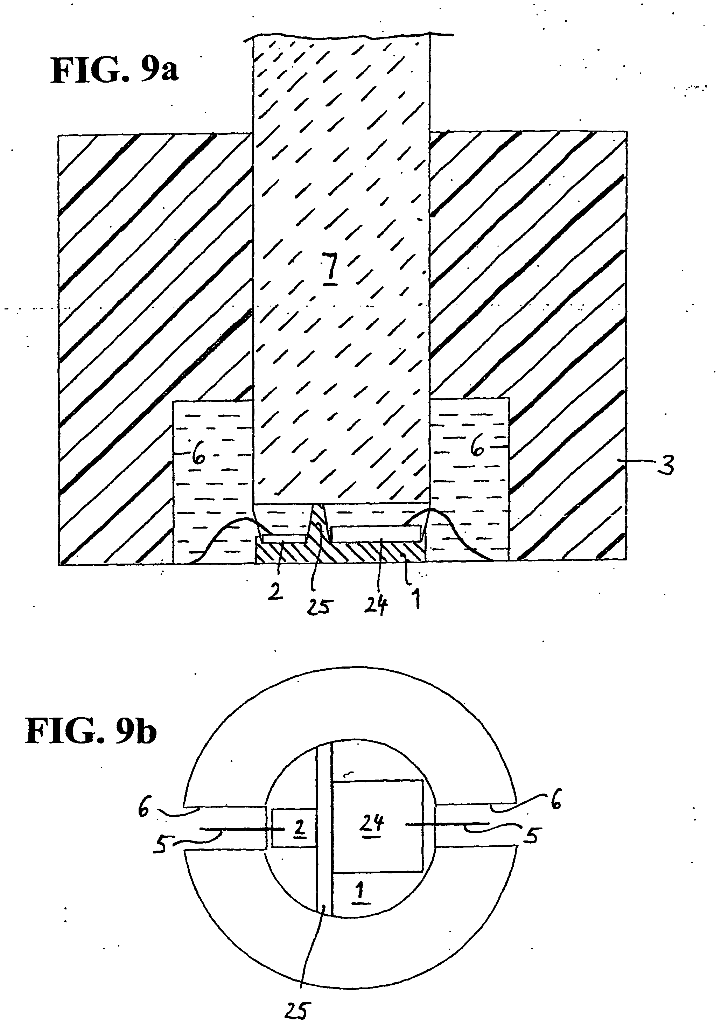

Die in Fig. 9a und Fig. 9b dargestellte Konstruktion ermöglicht den extrem kostengünstigen Aufbau von Sende/Empfangsmodulen (Transceivern), die gleichzeitig (also nicht im Zeitmultiplex oder Gegensprechverkehr) den Datenempfang und die Datenaussendung ermöglichen. Auf einem gemeinsamen Submount 1 sind eine LED 2 als Sender und eine Photodiode 24 (PD) als Empfänger angeordnet. Zwischen diesen beiden Bauelementen weist der Submount 1 einen Rücken 25 auf, der die beiden Bauelemente optisch voneinander abschirmt. In einem Kopplungselement 3 ist ein den beiden elektronischen Bauelementen 2 und 24 gemeinsamer LWL gefaßt. Der Submount weist zwei Schlitze 6 zur Aufnahme der von den Bauelementen 2 und 24 zur Leiterplatte (nicht dargestellt) führenden Bonddrähte 5 auf. Der Rücken 25 dient zugleich der Abstützung des Lichtwellenleiters im vorgegebenen Abstand von den Bauelementen 2 und 24 und übernimmt somit die Funktion, die bei den anderen Ausführungsformen die Schulter 8 übemimmt.

Vorteilhaft gegenüber dem Stand der Technik ist, daß die Dioden 2 und 24 elektrisch wechselwirkungsfrei sind, da der Strom der Sendediode nicht durch den Chip der Empfängerdiode hindurchfließen muß.

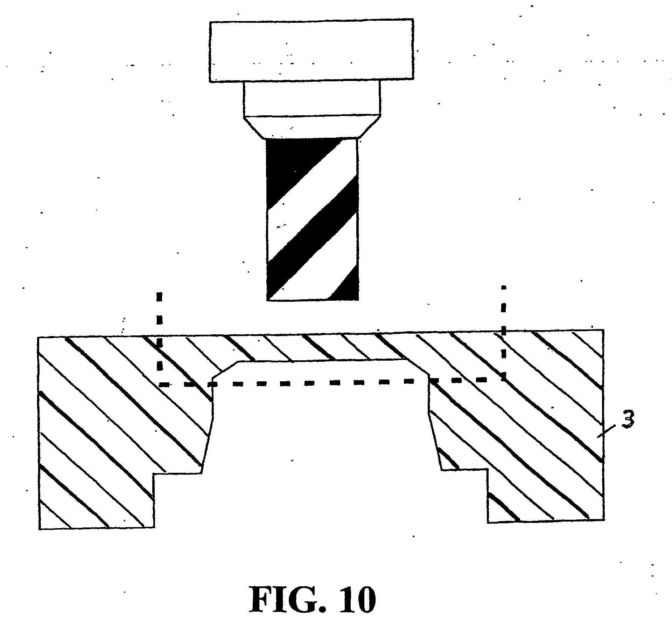

In Fig. 10 ist im Längsschnitt eine für hohe Präzisionsanforderungen geeignete Ausführungsform dargestellt, bei der das Kopplungselement 3 einseitig mit zunächst einem Sackloch ausgebildet wird, das später von der Rückseite mechanisch geöffnet wird, beispielsweise durch Fräsen, wodurch der in Fig. 10 von der gestrichelten Linie umgrenzte Bereich an der Oberseite des Kopplungselements 3 entfernt wird. Bei dieser Herstellungsmethode umgeht man die Toleranzen, die beim Spritzgießen von Werkzeugoberseite und Werkzeugunterseite auftreten, denn die zueinander passenden Teile sind von derselben Seite her definiert.

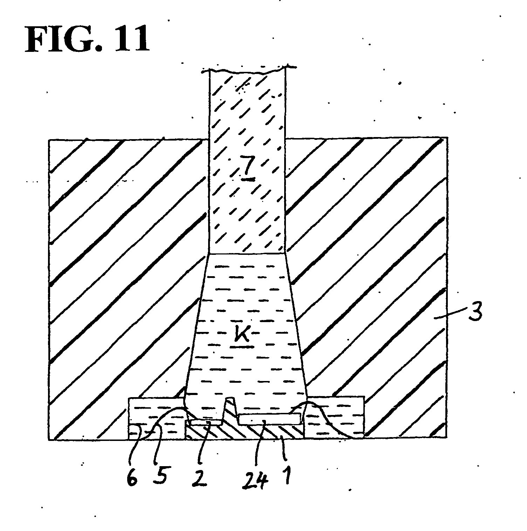

Besteht das Kopplungselement aus transparentem Kunststoff und ist der Brechungsindex des eingefüllten Klebers größer als der des Kopplungselements, so entsteht im Kopplungselement ein optischer Wellenleiter, der zur Querschnittsanpassung zwischen Faser und Einkoppelstelle verwendbar ist. So können beliebig viele elektro-optische Chips an eine einzige Faser angekoppelt werden. Ein Beispiel hierfür ist in Fig. 11 gezeigt.

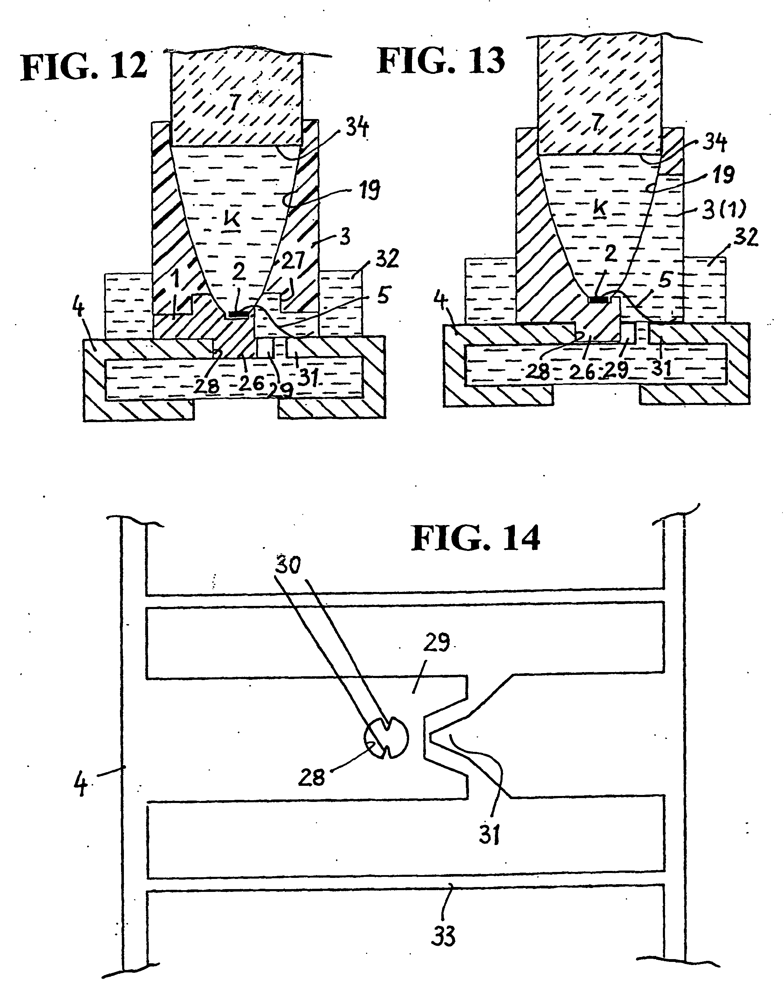

Fig. 12 zeigt eine Ausführungsform der Erfindung, bei der der Submount 1 an seiner dem Halbleiterbauelement 2 abgewandten Seite mit einem Zapfen 26 versehen ist. Der Submount 1 weist an seiner Oberseite eine mit einer Verspiegelung 19 versehene paraboloidförmige Vertiefung auf, vergleichbar der Ausführungsform von Fig. 4. Außerdem ist er an seiner Oberseite mit einer ringförmigen Stufe 27 versehen, an der ein zylindrisches Kopplungselement 3 zentriert ist, das eine axiale Bohrung aufweist, die paraboloidförmig gestaltet ist und sich an die Vertiefung im Submount 1 stufenlos anschließt. In das obere Ende dieser Bohrung ist ein Lichtwellenleiter 7 eingesetzt. Der Zwischenraum zwischen dessen Ende und dem ihm gegenüberstehenden, auf dem Submount befestigten Halbleiterelement 2 ist von einem transparenten Kleber K ausgefüllt.

Der Zapfen 26 des Submount ist von einem Durchbruch 28 in einer ersten Anschlußfahne 29 eines hier als Leadframe ausgebildeten Trägers 4 aufgenommen, der in Fig. 14 ausschnittsweise in Draufsicht dargestellt ist. In den Durchbruch 28 ragen am Leadframe integral ausgebildete Einpresshaken 30 hinein, die sich beim Eindrücken des Zapfens 26 in die Ausnehmung 28 an den Zapfen 26 federnd anlegen und sich mit ihren Spitzen in diesen eingraben, so daß der Zapfen 26 und hierdurch der gesamte Submount 1 an dem Leadframe 4 gesichert ist. Zusätzlich kann der Zapfen ggf. mit der Anschlußfahne 29 des Leadframe 4 verlötet werden, sofern er lötfähig ist. Der Leadframe 4 weist weiterhin eine zweite, von der ersten getrennte Anschlußfahne 31 auf, an der der Bonddraht 5 angeschlossen ist.

Zur mechanischen Stabilisierung der gesamten Anordnung ist der Leadframe 4 zusammen mit dem Submount 1 und dem Kopplungselement 3 im unteren Bereich desselben mit einem Kunststoff 32 vergossen. Dieser Kunststoff kann derselbe sein, der als Kleber K in die Bohrung und den Submount 1 eingefüllt ist, wobei in diesem Falle das Einfüllen des Klebers und das Vergießen der Anordnung mit Hilfe einer Gießform in einem einzigen Vorgang ausgeführt werden können. Es versteht sich, daß die die beiden Anschlußfahnen 29 und 31 des Leadframe 4 verbindenen Stege 33 und alle anderen Teile des Leadframe, die nicht benötigt werden und die in Fig. 14 zu erkennen sind, nach dem Vergießen der Anordnung abgetrennt werden.

Die altemative Ausführungsform nach Fig. 13 unterscheidet sich von der nach Fig. 12 dadurch, daß der Submount und das Kopplungselement zu einer integralen Einheit 3(1) zusammengefaßt sind. Alle übrigen Merkmale gleichen denen der Fig. 12 so daß auf eine wederholung der Erläuterung verzichtet werden kann.

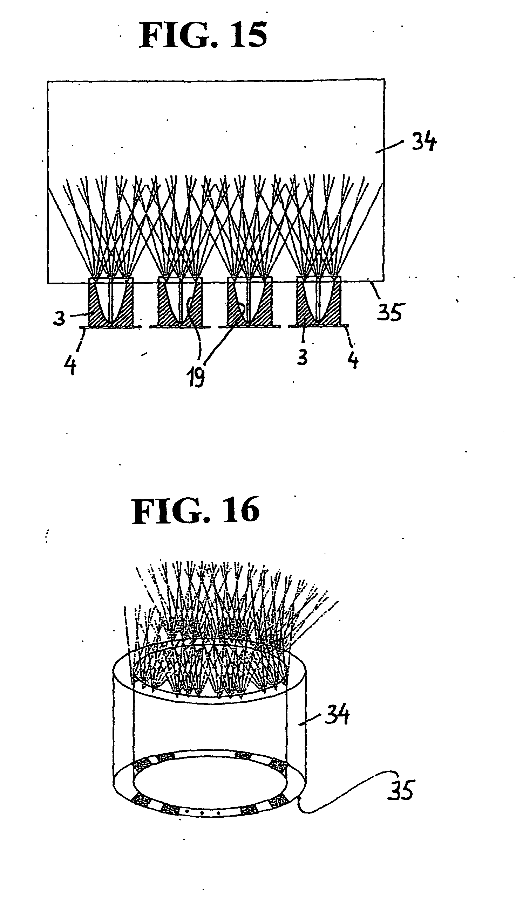

Fig. 15 zeigt eine Anordnung von im Beispiel vier Leuchtdioden, die nebeneinander an einen Rand 35 eines gemeinsamen Lichtwellenleiters 7 angekoppelt sind, der hier eine flache, lichtleitende Platte 34 beispielsweise aus einem Kunststoffmaterial ist. Die Leuchtdioden können dabei in Anordnungen gehalten sein, wie sie beispielsweise in den Fig. 12 und 13 dargestellt sind, und deren Ausbildung ist in Fig. 15 nur schematisch, d.h. ohne Einzelheiten gezeigt. Wesentlich ist allerdings, daß die Ankopplung an den den Leuchtdioden jeweils fernen Enden von Parabolspiegeln 19 erfolgt, die Teil von Kopplungselementen 3 sind und die zu diesem Zweck jeweils entsprechende Ausschnitte an ihrer freien Stirnseite aufweisen, die den Randbereich des plattenförmigen Lichtwellenleiters 34 aufnehmen. Die Leuchtdioden können verschiedenfarbig sein, so daß sich die Lichtfarben in dem Lichtwellenleiter 34 additiv mischen. Auf diese Weise ist bei passender Abstimmung der Farbtemperatur und der Leuchtintensität der Leuchtdioden die Erzeugung der Mischfarbe weiß möglich.

Fig. 16 zeigt eine der Fig. 15 vergleichbare Anordnung, bei der aus Übersichtlichkeitsgründen die Leuchtdioden und ihre Kopplungselemente nicht dargestellt sind. Wesentlich gegenüber der Ausführungsform nach Fig. 15 ist, daß der Lichtwellenleiter 34 als Rohr ausgebildet ist, an deren einen Rand 35 eine Vielzahl von Leuchtdioden jeweils mit einer erfindungsgemäßen Kopplungsanordnung angekoppelt ist, während der gegenüberliegende Rand als Lichtaustrittsfläche dient. Auch bei dieser Ausführungsform lassen sich Licht-Mischfarben erzeugen.

Es versteht sich, daß bei den Ausführungsformen der Fig. 15 und 16 vorzugsweise von allen Merkmalen Gebrauch gemacht ist, die unter Bezugnahme auf die vorangehenden Ausführungsbeispiele beschrieben worden sind, soweit diese einsetzbar sind. Das betrifft insbesondere die Verspiegelung aller an der Lichtführung beteiligten Komponenten, die Füllung von Leerräumen mit lichtdurchlässigen Klebern, die Ausrichtung der Lichtwellenleiter durch Formschluss an den Kopplungselementen und die Anbringung der Halbleiterbauelemente mittels Submounts an ihren jeweiligen Trägern sowie die Ausbildung derselben.

## Patentansprüche

1. Kopplungsanordnung zum optischen Koppeln eines Endes eines Lichtwellenleiters mit wenigstens einem elektro-optischen oder opto-elektrischen Halbleiterelement, das der Stirnfläche des Lichtwellenleiters optisch gegenübersteht, wobei
das Halbleiterelement (2) mit einem Träger (4) fest verbunden ist,
das Halbleiterelement (2) mit einem auf dem Träger (4) ausgebildeten Leiter mittels eines Bonddrahtes (5) elektrisch verbunden ist, und
ein Kopptungselement (3), das den Endbereich des Lichtwellenleiters (7) aufnimmt, mit dem Träger (4) verbunden ist,
**dadurch gekennzeichnet,**
**daß** das Halbleiterelement (2) auf einem elektrisch leitfähigen Submount (1) elektrisch leitend befestigt ist, der seinerseits mit seiner Unterseite auf dem Träger (4) elektrisch leitend befestigt ist, aber von dem genannten Leiter elektrisch isoliert ist,
der Submount (1) an seiner Oberseite eine Justagestruktur für das Halbleiteretement (2) in Form einer Vertiefung aufweist, in der das Halbleiterelement (2) präzise justiert ist,
das Kopplungselement (3) formschlüssig an dem Submount (1) ausgerichtet ist, und
der Zwischenraum zwischen dem Halbleiterelement (2) und der freien Stirnfläche des Lichtwellenleiters (7) von einem transparenten Kleber (K) ausgefüllt ist.

2. Kopplungsanordnung zum optischen Koppeln eines Endes eines Lichtwellenleiters mit wenigstens einem elektro-optischen oder opto-elektrischen Halbleiterelement, das der Stirnfläche des Lichtwellenleiters optisch gegenübersteht, wobei das Halbleiterelement (2) mit einem Träger (4) fest verbunden ist,
das Halbleiterelement (2) mit auf dem Träger (4) ausgebildeten Leitern mittels zweier Bonddrähte (5) elektrisch verbunden ist, und
ein Kopplungselement (3), das den Endbereich des Lichtwellenleiters (7) aufnimmt, mit dem Träger (4) verbunden ist,
**dadurch gekennzeichnet,**
**daß** das Halbleiterelement (2) auf einem elektrisch isolierenden, gut wärmeleitfähigen Submount (1) befestigt ist, der seinerseits mit seiner Unterseite auf dem Träger (4) befestigt ist,
der Submount (1) an seiner Oberseite eine Justagestruktur für das Halbleiterelement (2) in Form einer Vertiefung aufweist, in der das Halbleiterelement (2) präzise justiert ist,
das Kopplungselement (3) formschlüssig an dem Submount (1) ausgerichtet ist, und
der Zwischenraum zwischen dem Halbleiterelement (2) und der freien Stirnfläche des Lichtwellenleiters (7) von einem transparenten Kleber (K) ausgefüllt ist.

3. Kopplungsanordnung nach Anspruch 1 oder 2, **dadurch gekennzeichnet, daß** das Ende des Lichtwellenleiters (7) in eine Ausnehmung des Submount (1) spielfrei eingesetzt ist.

4. Kopplungsanordnung nach einem der vorhergehenden Ansprüche, **dadurch gekennzeichnet, daß** zwischen dem Halbleiterelement (2) und der Stirnfläche (34) des Lichtwellenleiters (7) ein den optischen Weg umgebender, strahlformender, metallischer Reflektor (19) angeordnet ist.

5. Kopplungsanordnung nach Anspruch 4, **dadurch gekennzeichnet, daß** der Reflektor (19) eine Metallschicht auf den das Halbleiterelement (2) umgebenden Flächen des Submount (1) ist.

6. Kopplungsanordnung nach Anspruch 4 oder 5, **dadurch gekennzeichnet, daß** der Reflektor (19) eine Metallschicht auf einer Wandung des Kopplungselements (3) zwischen der Stirnfläche (34) des Lichtwellenleiters (7) und einem dem Halbleiterelement (2) benachbarten Endbereich des Kopplungselements (3) ist.

7. Kopplungsanordnung nach einem der vorgehenden Ansprüche, **dadurch gekennzeichnet, daß** in dem Kopplungselement (3) wenigstens eine Aussparung (6) für die Aufnahme eines das Halbleiterelement (2) mit einer Schaltung verbindenden Bonddrahtes (5) ausgebildet ist.

8. Kopplungsanordnung nach einem der Ansprüche 1 bis 6, **dadurch gekennzeichnet, daß** an dem Submount (1) wenigstens eine Aussparung (6) für die Aufnahme eines das Halbleiterelement (2) mit einer Schaltung verbindenden Bonddrahtes (5) ausgebildet ist.

9. Kopplungsanordnung nach einem der vorhergehenden Ansprüche, **dadurch gekennzeichnet, daß** der Lichtwellenleiter eine Glasfaser (22) ist, deren dem Halbleiterelement (2) benachbarter Endbereich von einer hochpräzisen Ferrule (23) gefaßt ist, die das Kopplungselement bildet und deren Ende von einer im Submount (1) ausgebildeten Vertiefung aufgenommen ist.

## Claims

1. Coupling arrangement for optically coupling an end of an optical waveguide with at least one electro-optical or opto-electrical semiconductor component, which optically opposes the end face of the waveguide, wherein
the semiconductor component (2) is fixedly connected to a support (4),
the semiconductor element (2) is electrically connected by means of at least one bond wire (5) to conductors formed on the support (4) and
a coupling element (3) which receives the end portion of the optical waveguide (7) is connected to the support (4),
**characterized in that**
the semiconductor component (2) is electrically conductively fixed to an electrically conductive submount (1), which in turn is electrically conductively affixed with its bottom side to the support (4), but is electrically isolated from said conductor,
the submount (1) has on its top side an adjustment structure for the semiconductor element (2) in the form of a recess in which the semiconductor component (2) is precisely adjusted,
the coupling element (3) is positively aligned on the submount (1), and
the space between the semiconductor element (2) and the free end face of the optical waveguide (7) is filled by a transparent adhesive (K).

2. Coupling arrangement for optically coupling an end of an optical waveguide with at least one electro-optical or opto-electrical semiconductor component, which optically opposes the end face of the waveguide, wherein
the semiconductor component (2) is fixedly connected to a support (4),
the semiconductor element (2) is electrically connected by means of two bond wires (5) to conductors formed on the support (4) and
a coupling element (3) which receives the end portion of the optical waveguide (7) is connected to the support (4),
**characterized in that**
the semiconductor component (2) is fixed to an electrically insulating, thermally well conductive submount (1), which in turn is affixed with its bottom side to the support (4),
the submount (1) has on its top side an adjustment structure for the semiconductor element (2) in the form of a recess in which the semiconductor component (2) is precisely adjusted,
the coupling element (3) is positively aligned on the submount (1), and
the space between the semiconductor element (2) and the free end face of the optical waveguide (7) is filled by a transparent adhesive (K).

3. Coupling arrangement as claimed in claim 1 or 2, **characterized in that** the end of the optical waveguide (7) is inserted into a recess of the submount (1) without tolerance.

4. Coupling arrangement as claimed in one of the preceding claims, **characterized in that** a beam-forming, metallic reflector (19) surrounding the optical path is arranged between the semiconductor element (2) and the end face (34) of the optical waveguide (7).

5. Coupling arrangement as claimed in claim 4, **characterized in that** the reflector (19) is a metal layer on the surfaces of the submount (1) surrounding the semiconductor element (2).

6. Coupling arrangement as claimed in claim 4 or 5, **characterized in that** the reflector (19) is a metal layer on a wall of the coupling element (3) between the end face (34) of the optical waveguide (7) and an end portion of the coupling element (3) adjoining the semiconductor element (2).

7. Coupling arrangement as claimed in one of the preceding claims, **characterized in that** at least one recess (6) for accommodating a bond wire (5) connecting the semiconductor element (2) with a circuitry is formed in the coupling element (3).

8. Coupling arrangement as claimed in one of claims 1 to 6, **characterized in that** at least one recess (6) for receiving a bond wire (5) connecting the semiconductor element (2) with a circuit is formed on the submount (1).

9. Coupling arrangement as claimed in one of the preceding claims, **characterized in that** the optical waveguide is a glass fiber (22) whose end portion adjoining the semiconductor element (2) is held by a highly precise ferrule (23) forming the coupling element, the end of said ferrule being accommodated in a recess formed in said submount (1).

## Revendications

1. Dispositif de couplage pour le couplage optique d'une extrémité d'un guide d'ondes lumineuses avec au moins un élément semi-conducteur électro-optique ou opto-électrique, qui est optiquement en vis-à-vis de la surface frontale du guide d'ondes lumineuses,
l'élément semi-conducteur (2) étant relié fixement à un support (4),
l'élément semi-conducteur (2) étant relié électriquement par un fil de connexion (5) à un conducteur réalisé sur le support (4), et
un élément de couplage (3), qui reçoit la zone extrême du guide d'ondes lumineuses (7), étant relié au support (4),
**caractérisé en ce**
**que** l'élément semi-conducteur (2) est fixé en conduction électrique sur un substrat (1) électriquement conducteur, qui est pour sa part fixé en conduction électrique par son côté inférieur sur le support (4), mais est isolé électriquement dudit conducteur,
le substrat (1) présente sur son côté supérieur une structure d'ajustement pour l'élément semi-conducteur (2) sous forme d'une cavité dans laquelle l'élément semi-conducteur (2) peut être ajusté avec précision,
l'élément de couplage (3) est aligné par coopération de forme sur le substrat (1), et
l'espace intermédiaire entre l'élément semi-conducteur (2) et la surface frontale libre du guide d'ondes lumineuses (7) est rempli d'une colle transparente (K).

2. Dispositif de couplage pour le couplage optique d'une extrémité d'un guide d'ondes lumineuses avec au moins un élément semi-conducteur électro-optique ou opto-électrique, qui est optiquement en vis-à-vis de la surface frontale du guide d'ondes lumineuses, l'élément semi-conducteur (2) étant relié fixement à un support (4),
l'élément semi-conducteur (2) étant relié électriquement par deux fils de connexion (5) à des conducteurs réalisés sur le support (4), et
un élément de couplage (3), qui reçoit la zone extrême du guide d'ondes lumineuses (7), étant relié au support (4),
**caractérisé en ce**
**que** l'élément semi-conducteur (2) est fixé sur un substrat (1) isolant électriquement, bon conducteur de chaleur, qui est pour sa part fixé par son côté inférieur sur le support (4),
le substrat (1) présente sur son côté supérieur une structure d'ajustement pour l'élément semi-conducteur (2) sous forme d'une cavité dans laquelle l'élément semi-conducteur (2) est ajusté avec précision,
l'élément de couplage (3) est aligné par coopération de forme sur le substrat (1), et
l'espace intermédiaire entre l'élément semi-conducteur (2) et la surface frontale libre du guide d'ondes lumineuses (7) est rempli d'une colle transparente (K).

3. Dispositif de couplage suivant l'une des revendications 1 et 2, **caractérisé en ce que** l'extrémité du guide d'ondes lumineuses (7) est insérée sans jeu dans un creux du substrat (1).

4. Dispositif de couplage suivant l'une des revendications précédentes, **caractérisé en ce qu'**un réflecteur métallique (19) formateur de faisceaux entourant le chemin optique est disposé entre l'élément semi-conducteur (2) et la surface frontale (34) du guide d'ondes lumineuses (7).

5. Dispositif de couplage suivant la revendication 4, **caractérisé en ce que** le réflecteur (19) est une couche métallique sur les surfaces du substrat (1) qui entourent l'élément semi-conducteur (2).

6. Dispositif de couplage suivant l'une des revendications 4 et 5, **caractérisé en ce que** le réflecteur (19) est une couche métallique sur une paroi de l'élément de couplage (3) entre la surface frontale (34) du guide d'ondes lumineuses (7) et une zone extrême de l'élément de couplage (3) voisine de l'élément semi-conducteur (2).

7. Dispositif de couplage suivant l'une des revendications précédentes, **caractérisé en ce qu'**au moins un évidement (6) est réalisé dans l'élément de couplage (3) pour loger un fil de connexion (5) reliant l'élément semi-conducteur (2) à un circuit.

8. Dispositif de couplage suivant l'une des revendications 1 à 6, **caractérisé en ce qu'**au moins un évidement (6) est réalisé sur le substrat (1) pour loger un fil de connexion (5) reliant l'élément semi-conducteur (2) à un circuit.

9. Dispositif de couplage suivant l'une des revendications précédentes, **caractérisé en ce que** le guide d'ondes lumineuses est une fibre de verre (22) dont la zone extrême voisine de l'élément semi-conducteur (2) est maintenue par une ferrule (23) de haute précision, qui forme l'élément de couplage et dont l'extrémité est logée dans une cavité réalisée dans le substrat (1).
